# EUROPÄISCHE PATENTSCHRIFT

(11) **EP 1 879 162 B1**
(45) Veröffentlichungstag und Bekanntmachung des Hinweises auf die Patenterteilung: **15.05.2013**
(21) Anmeldenummer: 07012895.4
(22) Anmeldetag: 02.07.2007
(51) Int. Cl.: G09B 29/04, B29C 53/00, B29C 59/00

(54) **Faltbares Produkt sowie Verfahren zum Herstellen eines mit Kunststofffolie veredelten Produktes**
Foldable product and method for manufacturing a product refined with plastic film
Produit pliant tout comme procédé destiné à la fabrication d'un produit estampillé avec une feuille en plastique

(30) Priorität: 03.07.2006 DE 102006030958; 15.12.2006 DE 102006059806
(43) Veröffentlichungstag der Anmeldung: 16.01.2008
(73) Patentinhaber: Werner Achilles GmbH & Co. KG, 29221 Celle (DE)
(72) Erfinder: Hörnicke, Stefan, 29313 Hambühren (DE)
(74) Vertreter: Stornebel, Kai

(56) Entgegenhaltungen:
- EP-A- 0 062 198
- WO-A-92/18319
- WO-A-96/01180
- WO-A-02/085604
- DE-A1- 3 318 937
- DE-A1- 4 036 021
- DE-U1- 29 922 139

## Beschreibung

Die Erfindung betrifft ein faltbares Produkt mit einem Substrat, das mit einer Kunststofffolie veredelt ist und Falzlinien aufweist, entlang derer das Produkt faltbar ist, sowie ein Verfahren zum Herstellen von mit Kunststofffolie veredelten Produkten.

Papier-, Karton- und Pappprodukte werden häufig mit einer Kunststofffolie veredelt, um sie gegenüber Umwelteinflüssen widerstandsfähiger zu machen. Typische Anwendungsbeispiele sind Lernhilfen in Form von Klappfoldern, öffentlich zugängliche Informationsblätter oder Informationstafeln, Speisekarten und Landkarten bzw. Stadtpläne oder Buchumschläge, die entlang von Falzlinien auf das gewünschte Format gebracht werden können.

Bei beidseitig eingesiegelten Produkten allgemein und insbesondere bei Lernhilfen in Form von Klappfoldern besteht das Problem, dass durch die in der Regel beidseitig aufgebrachten Kunststofffolien ein Falten entlang der vorgegebenen Falzlinien erschwert ist, da sich auf der Innenseite des Falzes eine Materialanhäufung ausbildet.

An dieser Stelle können entweder das Substrat oder die aufgebrachten Kunststofffolien reißen. Ebenfalls kann auf der Falzaußenseite eine sehr starke Dehnung der Kunststofffolie auftreten, was zu Rissen oder Strukturveränderungen innerhalb der Kunststofffolie führen kann, so dass die dortigen Bereiche des Produktes nicht erkennbar sind oder der Feuchtigkeit ausgesetzt werden können. Ein weiteres Problem besteht in dem bedeutenden Biegewiderstand in diesen Falzlinien, was bewirkt, dass die einzelnen Elemente des Produktes, z.B. des Klappfolders oder des Buchumschlages in ihrem Schwenkgrad und ihrer Leichtigkeit des Schwenkens stark begrenzt sind. Des Weiteren weist die Bahn der Falzlinie wegen des Ausmaßes des Biegewiderstandes im Verhältnis zum Gewicht der Einzelelemente ein Formerinnerungsvermögen auf. Das Formerinnerungsvermögen wird als Neigung der Bahn definiert, über den Biegewiderstand zu bewirken, dass sich die Blätter nach der Betätigung auf eine neue Position auf eine frühere Position zurückziehen. Das Formerinnerungsvermögen ist üblicherweise zu beobachten, wenn ein gefalztes Produkt flach auf einer Tischplatte geöffnet wird. Das Produkt wirkt dem 180° Winkel entgegen und die Seiten ziehen sich gegen eine geschlossene Position.

Um diesem Problem zu begegnen, sieht die DE 40 36 021 A1 vor, mehrere biegesteife Teilkarten parallel nebeneinander auszurichten und beidseitig mit einer Kunststofffolie zu beschichten. Zwischen den Teilkarten befindet sich ein Zwischenraum, in dem die Kunststofffolien unmittelbar aufeinander liegen. Nachteilig hieran sind eine aufwändige Ausrichtung der Teilkarten sowie die Notwendigkeit eines besonderen Werkzeuges zum sicheren Andrücken der Kunststofffolien aneinander.

Aus der DE 299 22 139 U1 ist eine kaschierte Land- oder Straßenkarte bekannt, bei der im Bereich eines Kreuzbruches der Karte eine längliche Öffnung im Kartenbogen ausgebildet ist, die von den Kunststofffolien überdeckt ist. An einer Schmalseite der Öffnung ist ein Steg belassen, der einen Kartenrücken bildet und mit einer Kartenbezeichnung bedruckbar ist. Problematisch hierbei ist die Herstellung des Kartenbogens mit der Notwendigkeit des Ausstanzens der Öffnung und dem aufwändigen Kaschieren.

Die DE 690 28 848 T2 beschreibt einen Laminatgegenstand mit Scharnier, bei dem zwei oder mehr Blätter mit einem Zwischenraum zueinander angeordnet sind. Zwischen den Blättern können integral ausgebildete Streifen vorhanden sein, die ein Ausrichten überflüssig machen. Die Blätter werden beidseitig mit einer Kunststofffolie kaschiert. Aufgrund des nicht vorhandenen Papiermaterials innerhalb der Lücke lässt sich der Gegenstand leicht falten. Das gleiche Prinzip ist aus der EP 62198 A2 bekannt.

Dem Stand der Technik ist eine Entfernung des Papier- oder Pappmaterials bzw. eine beanstandete Anordnung von Substraten zueinander gemeinsam, um ein Kunststofffilmscharnier auszubilden. Dies hat Lücken im bedruckten oder unbedruckten Substrat oder Druckträger zur Folge und benötigt eine aufwändigere Verarbeitung, da zuerst große Bogen in die notwendige Anzahl kleinerer Bogen geschnitten werden und in der Regel per Hand zueinander ausgerichtet werden müssen. Alternativ müssen Bereiche aus einem Druckbogen ausgestanzt werden, was ebenfalls zeit- und kostenaufwändig ist. Durch die individuell notwendige Vorbereitung des bedruckten oder unbedruckten Papier- oder Pappproduktes vor dem anschließenden Kaschiervorgang sind die Durchlaufzeiten sowie die Herstellkosten sehr hoch.

Die WO 96/01180 beschreibt ein Verfahren zum Versiegeln eines wabenförmigen Kunststoffmaterials, bei dem die Folie in Verbindung mit der Zufuhr von Wärme durch ein Paar Rollen hindurchgeführt wird, von denen zumindest eine profiliert ist. Die Wärme wird zugeführt, um die Folie vorab zu verformen und anschließend das Versiegeln und Verschweißen auszuführen.

Die WO 02/085604 A1 beschreibt ein Verfahren zum Rillen von homogenen, mehrschichtigen oder mit Stegen versteiften, biegesteifen Kunststoffmaterialien, bei dem einseitig in der Tiefe wirkend eine Wärmestrahlung eingebracht und anschließend ein Bearbeitungsplotter mit einem Rillwerkzeug in das Material hineinfährt.

Aufgabe der vorliegenden Erfindung ist es, ein Produkt und ein Verfahren zum Herstellen eines mit Kunststofffolie veredelten Produktes bereitzustellen, das kostengünstiger herzustellen und eine verbesserte Optik bzw. Lesbarkeit aufweist.

Erfindungsgemäß wird diese Aufgabe durch ein faltbares Produkt nach Anspruch 1 sowie ein Verfahren nach Anspruch 6 gelöst. Vorteilhafte Ausgestaltungen und Weiterbildungen der Erfindung sind in den Unteransprüchen beschrieben.

Das erfindungsgemäße faltbare Produkt mit einem Substrat, das mit einer Kunststofffolie veredelt ist und zumindest eine Falzlinien aufweist, entlang derer das Produkt faltbar ist, sieht vor, dass entlang der Falzlinien des beidseitig veredelten, bedruckten Substrates aus Papier, Pappe, Karton oder Kunststoff die Kunststofffolie auf beiden Seiten des bedruckten Substrates zumindest bereichsweise über einen Teil ihrer Materialstärke ohne Wärmedurchtritt zu dem Substrat aufgeschmolzen ist und eine durch Materialverdrängung erhaltene Prägestruktur aufweist. Durch die zunächst ununterbrochene Aufbringung der Kunststofffolie auf das nicht getrennte oder teilweise ausgestanzte

Substrat ist es möglich, die gesamte Produktoberfläche schnell und mit herkömmlichen Maschinen zu veredeln. Erst nach der vollständigen Veredelung der Oberfläche wird durch das gezielte Aufschmelzen von Teilbereichen der Kunststofffolie und Verdrängung des aufgeschmolzenen Materials eine individuelle Prägestruktur erreicht, die ein Falzen entlang der Falzkanten erleichtert oder ermöglicht. Anders als bei dem Stand der Technik sind keine aufwändigen Stanz- oder Ausrichtvorgänge auszuführen, stattdessen kann das Verdrängen des aufgeschmolzenen Kunststoffmaterials leicht automatisiert durch Prägeräder oder Walzen erfolgen. Im Extremfall kann das komplette Kunststofffolienmaterial entlang der gesamten Falzlinie bzw. parallel zu den Falzlinien verdrängt werden, wobei die Prägestruktur unterbrochen oder als durchgängige Linie ausgebildet sein kann. Ebenfalls ist es möglich, dass ein Teil des Materials der Kunststofffolie nicht verdrängt wird und somit einen schützenden Film darstellt, der über dem Produkt verbleibt. Unter Veredeln wird dabei eine Vielzahl von Verfahren verstanden, mit denen ein schützender Überzug auf das Substrat aufgebracht werden kann, beispielsweise Kaschieren, Laminieren, Einsiegeln oder Lackieren. Die Prägestruktur kann in ihrer Ausprägung oder Ausgestaltung völlig individuell ausfallen. Das Substrat und ggf. die Kunststofffolie können Druckschrift aufweisen bzw. enthalten, so dass insbesondere eine Verwendung als Lernhilfe unter widrigen Umweltbedingungen und als Buchumschlag günstig ist. Die Verwendung als Buchumschlag hat den Vorteil, dass durch die Wahl der Folien und des Substrates unterschiedliche Steifigkeiten und Flexibilitäten erzielt werden können, die auf den jeweiligen Einsatzzweck abgestimmt sind. Das Substrat als Trägermaterial der Kunststofffolie oder -folien kann bedruckt oder unbedruckt ausgebildet sein und besteht aus Papier, Pappe oder Karton; ebenfalls kann das Substrat aus einem Kunststoff oder Kunststoffpapieren bestehen.

Neben einer durchgängigen Ausgestaltung der Prägestruktur, beispielsweise als Linie entlang der Falzlinien, kann die Prägestruktur auch unterbrochen sein, ähnlich einer Perforation, um so bereichsweise Material aus der Falzlinie zu entfernen.

Statt einer einzigen Prägestruktur entlang einer Falzlinie können auch mehrere, bevorzugt parallele Linien als Prägestruktur nebeneinander angeordnet sein. Die Anzahl und die Abstände der Prägelinien zueinander können individuell gewählt werden, ebenso können die Prägelinien winkelig zueinander ausgerichtet sein, um schräge Falzungen zu ermöglichten.

Neben einer gleichseitigen Anordnungen der Prägungen oder Prägelinien, bei der die Prägung auf einer Seite des Substrates stattfindet, können die Prägelinien wechselseitig aufgebracht sein, also beidseitig des Substrates um eine Faltung in beide Richtungen oder eine Leporello-Faltung zu ermöglichen.

Das erfindungsgemäße Verfahren zum Herstellen eines mit Kunststofffolie veredelten Produktes, bei dem ein bedrucktes Substrat aus Papier, Pappe, Karton oder Kunststoff, insbesondere ein Druckereierzeugnis, beidseitig mit Kunststofffolie veredelt wird, sieht vor, dass über Ultraschallsonotroden in die Kunststofffolie zumindest bereichsweise über zumindest einen Teil der Materialstärke entlang in der Falzlinie des Substrates ohne Wärmedurchtritt zu dem bedruckten Substrat aufgeschmolzen und der aufgeschmolzene Teil der Kunststofffolie durch ein Prägewerkzeug verdrängt wird. Das erfindungsgemäße Verfahren zum Herstellen von Produkten, die mit Kunststofffolie veredelte Substrate oder Träger aufweisen, insbesondere Druckereierzeugnisse, sieht vor, dass über Ultraschallsonotroden die Kunststofffolie zumindest teilweise über zumindest einen Teil der Materialstärke aufgeschmolzen und der aufgeschmolzene Teil der Kunststofffolie durch ein Prägewerkzeug verdrängt wird. Mit Hilfe dieses Verfahrens wird eine individuelle Struktur in das vorher mit Kunststofffolie beschichtete Produkt geprägt. Entlang dieser geprägten Struktur, für Falzprodukte oder Landkarten oder dergleichen in der Regel linear ausgerichtet, wird das einfache Falzen des fertigen Produktes ermöglicht. Dank der Ultraschalltechnologie werden mit Hilfe hochfrequenter Sonotroden lediglich Moleküle bis zu einer definierten Materialtiefe innerhalb der Kunststofffolie in Schwingungen versetzt, wodurch nur ein Teil der Kunststofffolie aufgeschmolzen wird.

Die Form der Sonotroden kann individuell gewählt sein, beispielsweise können schwingende Walzen vorgesehen sein. Ebenfalls ist es vorgesehen, dass die Sonotroden gleichzeitig mit einer Struktur versehen sind, um die gewünschte Struktur in die Kunststofffolie einzuprägen.

Die Breite der Prägestruktur, insbesondere einer Linie, wird durch die Breite der eingesetzten Sonotrode bzw. der eingesetzten Sonotroden und der Prägewalze bzw. Prägewalzen definiert. Dabei werden die schwingenden Moleküle plastisch durch eine eintauchende Struktur des Prägewerkzeuges, bevorzugt der Prägewalze, verdrängt.

Die Prägestruktur kann als periodisch wiederkehrendes Muster aufgebracht werden, beispielsweise durch ein nebeneinander ausgeführtes Abrollen einer Prägewalze oder Entlangführen eines Prägewerkzeuges. Ebenfalls kann die Prägestruktur auf dem Prägewerkzeug aufgebracht sein, beispielsweise als Muster auf einer Prägewalze, wodurch beim Abrollen der Prägewalze auf der Kunststofffolie die periodisch wiederkehrende Prägestruktur erzeugt wird.

Bevorzugt wird die Sonotrode so eingestellt, dass die Prozesswärme lediglich im schwingenden Molekülbereich entsteht, so dass das darunter liegende Substrat thermisch nicht belastet wird. Dadurch kann eine Farbveränderung durch unerwünschte, prozessbedingte Wärmereaktionen von Druckfarben verhindert werden. Ebenfalls können andere thermische Reaktionen des Substrates durch diese Prozessführung ausgeschlossen werden.

Das Aufschmelzen und das Prägen können gleichzeitig erfolgen, wobei die prägende Verdrängung ausreicht, um gewünschte Biegeeigenschaften zu erzielen, ohne dass Eigenschaften des Produktes beeinträchtigt werden. Die Prägestruktur kann wahlweise beidseitig oder von Prägelinie zu Prägelinie abwechselnd jeweils auf der gegenüberliegenden Seite des Produktes aufgebracht werden, was für Leporello-Faltung vorteilhaft ist.

Neben dem Einsatzgebiet für eine Falzung können durch das Verfahren auch individuelle Prägungen in definierten Tiefen vorgenommen werden, beispielsweise indem in die Kunststofffolienoberfläche fortlaufend Logos, Schriftzeichen, Ziffern oder Sicherheitsmerkmale eingeprägt werden. Ebenfalls können Schriftzüge oder kundenindividuelle Sicherheitszeichen oder andere optische Effekte mit Hilfe der Prägung realisiert werden. Andere optische Effekte wie das Inline-mattieren ursprünglich glänzender Kunststoffoberflächen mittels feiner Prägestrukturen oder glanz/matt-Effekte mit Hilfe spezieller Prägedesigns sind weitere beispielhafte Anwendungen der Erfindung. Die Prägestruktur kann einseitig aufgebracht werden, ohne eine Negativprägung auf der Rückseite zu bewirken.

Die Verwendung eines oben beschriebenen Produktes, insbesondere nach dem oben beschriebenen Verfahren hergestellten Produktes als Buchumschlag hat den Vorteil, dass der Textblock sowohl eingehängt als auch klebegebunden eingearbeitet ist. Beispielsweise bei einem Taschenbuch würde der Umschlag aus einem bedruckten Substrat, beispielsweise Papier, und zwei entsprechend aufgebrachten Folien bestehen, an dessen inneren Falzlinien die Prägestruktur in Linienform eingearbeitet ist. Die Prägelinien verlaufen dabei entlang der Seitenkanten des Textblockes, so dass eine gute Anbindung des Umschlages an den Textblockrücken erreicht werden kann. Neben einer Verwendung als Taschenbuchumschlag kann auch ein Festeinband bei entsprechender Substratbeschaffenheit, auch für eingehängte Textblöcke, verwirklicht werden. Hierbei erfolgt die Verbindung zwischen Textblock und Umschlag mittels Verkleben der vor- und Nachsatzes. Als Substrat können neben Papier und Karton auch Folien eingesetzt werden.

Nachfolgend werden Ausführungsbeispiele der Erfindung anhand der beigefügten Figuren näher erläutert. Es zeigen:
- Figur 1 -: eine Draufsicht auf eine erste Ausführungsform der Erfindung;
- Figur 2 -: eine Schnittdarstellung der Figur 1;
- Figuren 3a und 3b -: die Teildarstellungen einer Prägestruktur;
- Figuren 4a und 4b -: eine Variante der Figur 3;
- Figur 5 -: eine Draufsicht auf eine Variante der Figur 1;
- Figur 6 -: eine Schnittdarstellung der Figur 5;
- Figur 7 -: eine Variante der Figur 1;
- Figur 8 -: eine Schnittdarstellung der Figur 7;
- Figur 9 -: eine Variante der Figur 1;
- Figur 10 -: eine Schnittdarstellung der Figur 9;
- Figur 11 -: eine Draufsicht auf eine Prägemaschine;
- Figur 12 -: eine Schnittdarstellung der Figur 11; sowie
- Figur 13 -: eine Schnittdarstellung der Figur 11 aus Blickrichtung der Materiallaufbahn.

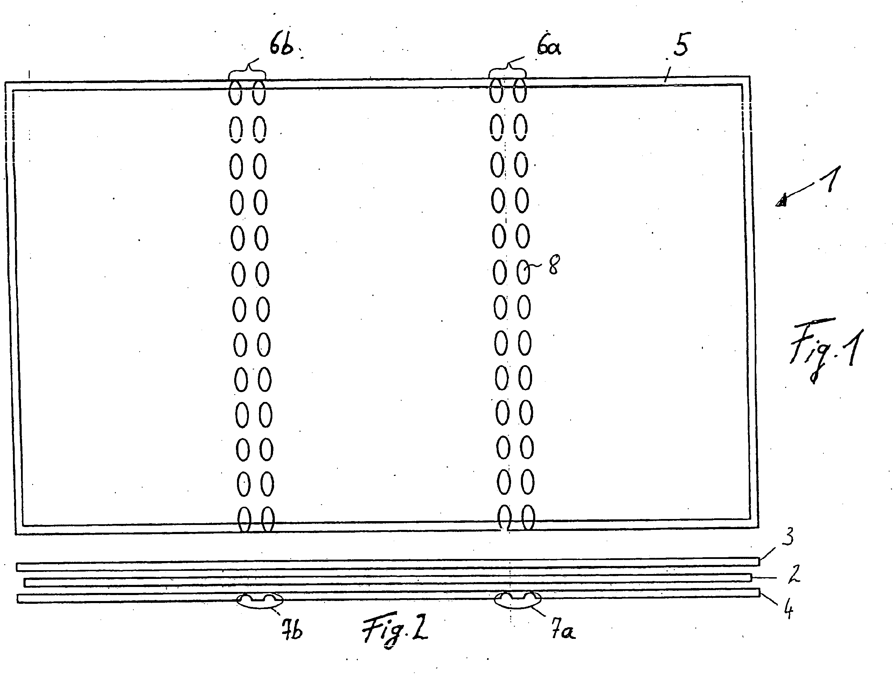

Figur 1 zeigt in Draufsicht ein laminiertes Papierprodukt 1, beispielsweise einen Klappfolder oder Buchumschlag, der mit zwei Kunststofffolien 3, 4, die in der Figur 2 gezeigt sind, veredelt ist. Das Produkt 1 sieht ein Substrat 2 vor, das als Papier-, Karton- oder Pappprodukt ausgebildet sein kann und gegebenenfalls bedruckte Oberflächen aufweist. Auf die Oberflächen des Substrates 2 sind die evt. bedruckten Kunststofffolien 3, 4 aufkaschiert, so dass das Substrat 2 vollständig von den Kunststofffolien 3, 4 umgeben ist. In der Figur 1 ist ein umlaufender Rand 5 gezeigt, an dem die beiden Kunststofffolien 3, 4 miteinander verbunden sind. Die Kunststofffolien 3, 4 können aus verschiedenen Materialien bestehen, bevorzugt sind thermoplastische Kunststoffe. Die Kunststofffolien können ein- oder mehrlagig ausgebildet sein und ggf. eine Beschichtung aufweisen.

In einer der beiden Folien 3, 4 sind zwei Doppelprägelinien 6a, 6b aus parallel zueinander angeordneten Reihen ovaler Prägungen 8 ausgebildet. Das entsprechende Prägeprofil 7a, 7b ist in der Figur 2 dargestellt. Entlang dieser Doppelprägelinien 6a, 6b kann das Produkt 1 gefalzt werden, wobei die Falzung entlang einer jeden Prägelinie stattfinden kann, die Prägelinien entsprechen somit den Falzlinien.

Wie der Figur 2 zu entnehmen ist, ist das Prägeprofil 7a nicht durchgehend aufgeschmolzen und verdrängt, vielmehr ist nur ein Teil der Kunststofffolie 4 aufgeschmolzen und verdrängt, so dass ein Kunststofffolienfilm geringerer Stärke als der Ausgangsfolie erhalten bleibt, um das Substrat 2 zu schützen.

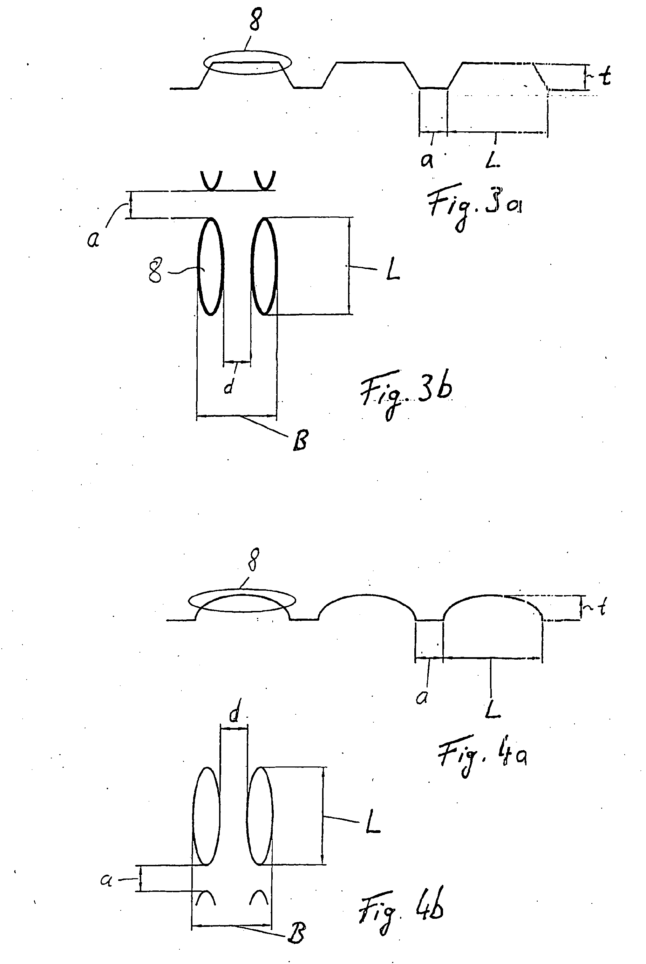

In der Figur 3a ist in einem Längsschnitt durch eine Prägelinie das Profil einer Prägelinie dargestellt. Die Prägung 8 ist vorliegend eckig ausgeführt und sieht eine Beabstandung der jeweiligen Prägungen 8 zueinander vor. Der Abstand a zwischen den einzelnen Prägungen 8 kann gleichmäßig oder variabel gestaltet sein. Die Länge L der Prägung 8 ist abhängig von dem Einsatzzweck des Produktes, der Stärke der Kunststofffolien 3, 4 sowie der Stärke des Substrates 2. Die Prägetiefe t kann ebenfalls variieren und im Extremfall die gesamte Stärke der Kunststofffolie 3, 4 ausmachen, so dass das Substrat 2 freigelegt ist. Es ist jedoch überwiegend vorgesehen, einen Teil der Kunststofffolie nicht aufzuschmelzen und über eine Materialverdrängung zu entfernen, so dass ein Schutzüberzug für das Substrat 2 erhalten bleibt.

In der Figur 3b ist in Detaildarstellung ein Teil einer Doppelprägelinie 6a dargestellt. Die Einzelprägung 8 weist eine ovale Kontur auf, wobei die Prägungen 8 mit einem Abstand d zueinander angeordnet sind. Die Gesamtbreite B der Doppelprägelinie 6a kann variieren und richtet sich nach der zu erreichenden Falzbreite.

Die Kontur der Prägung 8 kann über Einzelprägungen, wie Prägestempel oder Prägeleisten, oder durch eine abrollende Prägerolle oder Prägewalze aufgebracht werden.

In der Figur 4a ist eine Variante des Prägeprofils dargestellt, bei der die Einzelprägung 8 keine eckige Kontur, wie in der Figur 3a, aufweist, sondern eine gerundete Kontur. Im Übrigen entspricht das Profil jedoch dem der Figuren 3a und 3b.

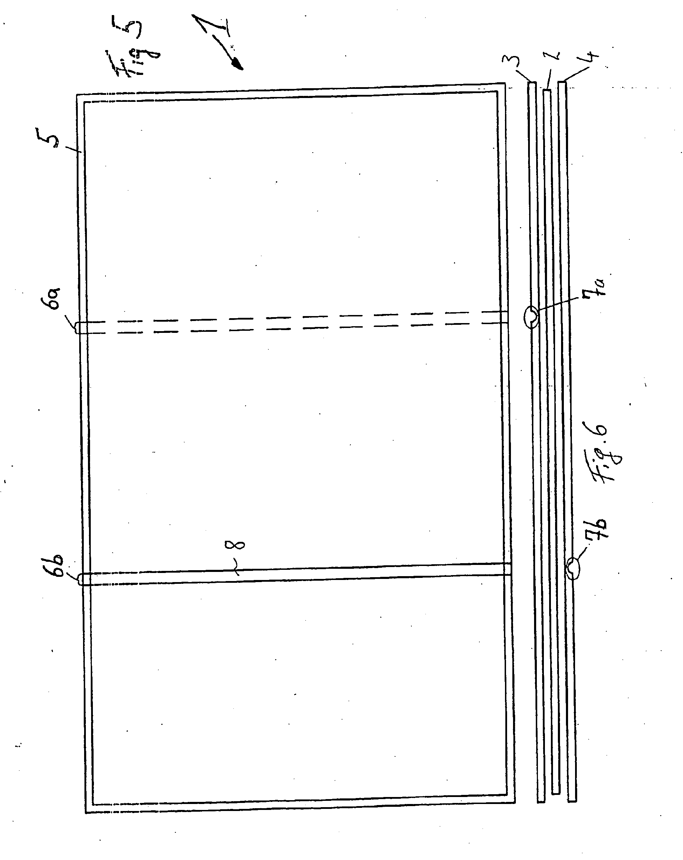

In den Figuren 5 und 6 ist eine Variante der Ausgestaltungsform gemäß der Figuren 1 und 2 gezeigt, bei der ebenfalls ein umlaufener Rand 5 gebildet ist. Die Prägung 8 ist dabei als eine durchgängige Prägung in Gestalt einer Prägelinie ausgebildet, entlang der eine Falzung stattfinden kann. Die Figur 6 zeigt, dass die Prägeprofile 7a, 7b auf unterschiedlichen Kunststofffolien 3, 4 ausgebildet sind, um eine alternierende Faltung zur Herstellung einer Leporello-Faltung des Produktes 1 zu erzeugen.

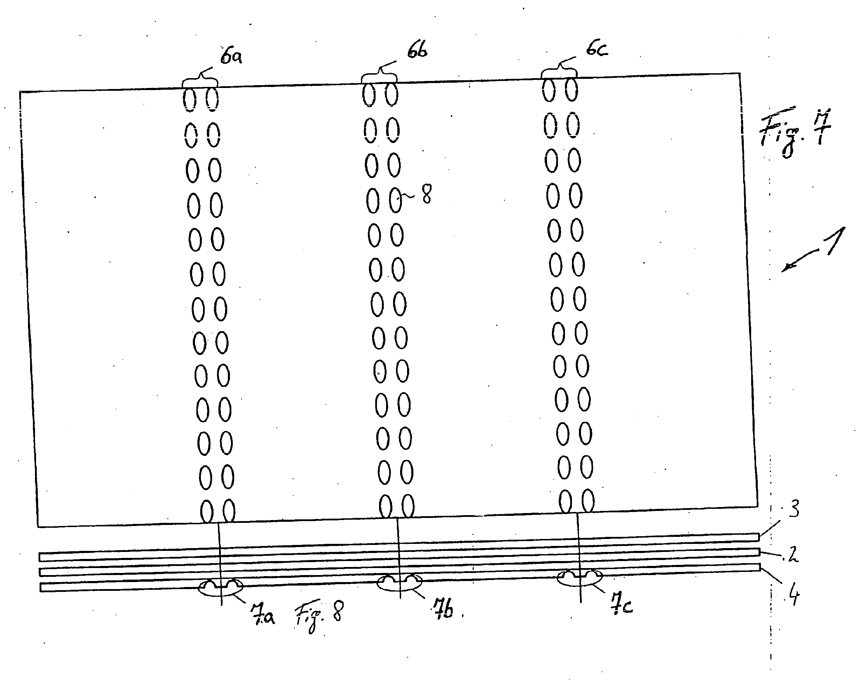

In den Figuren 7 und 8 ist eine Variante der Ausführungsform gemäß der Figur 1. und Figur 2 dargestellt, bei der drei Doppelprägelinien 6a, 6b, 6c auf nur einer Kunststofffolie 4 aufgebracht sind. Für eine Leporello-Faltung müsste die mittlere Doppelprägelinie 7b auf der oberen Kunststofffolie 8 aufgebracht sein. Ein weiterer Unterschied zu der Ausführungsform gemäß Figuren 1 und 2 besteht darin, dass kein umlaufender Rand ausgebildet ist, vielmehr schließen die Kunststofffolien 3, 4 bündig mit dem Substrat 2, beispielsweise eine Papier-, Karton- oder Pappprodukt ab.

Durch die drei Doppelprägelinien 6a, 6b, 6c werden insgesamt 4 Teile eines Klappfolders unterteilt, so dass im zusammengelegten Zustand insgesamt 8 separate Druckseiten realisiert werden können. Die Falzung verläuft dabei bevorzugt entlang der jeweiligen Doppelprägelinien 6a, 6b, 6c.

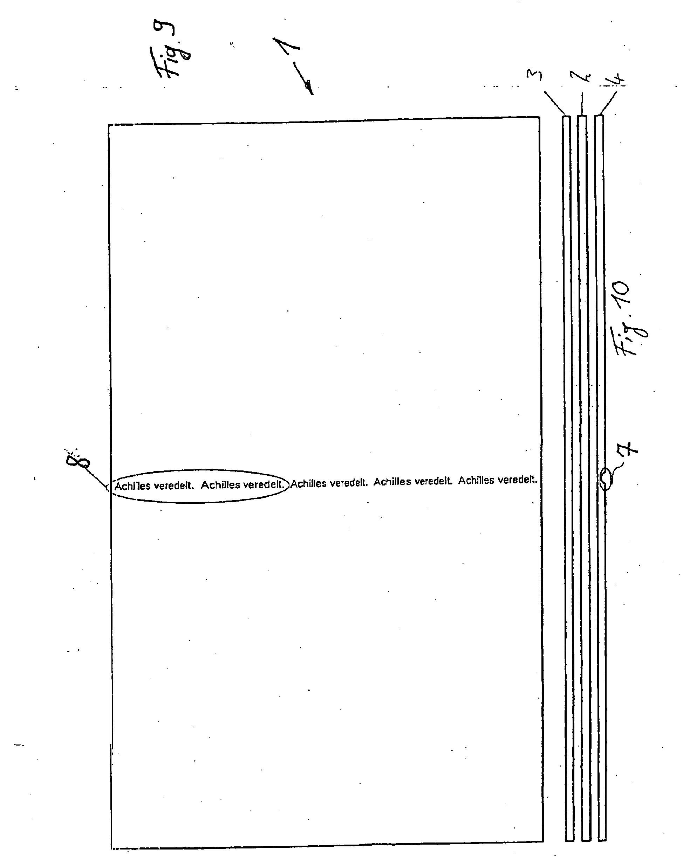

Die Figuren 9 und 10 zeigen eine Einfachprägung 8 als eine endlos verlaufende Logoprägung, wobei die Kunststofffolien 3, 4 ohne Rand auf dem Substrat 2 aufgebracht sind. Die Logoprägung 8 bildet ein durchgängiges Prägeprofil 7 aus und sieht vor, dass innerhalb des Prägeprofils ein Text oder ein Muster oder Logo eingeprägt ist, so dass neben der Funktion einer Materialschwächung gleichzeitig eine Information transportiert werden kann.

Neben dem darstellten abgerundeten, durchgängigen Profil kann eine Logoprägung 8 auch mit Einzelprägungen gemäß der Figur 1 ausgeführt sein. Ebenfalls kann das Profil neben der dargestellten runden Kontur auch eine eckige Kontur aufweisen.

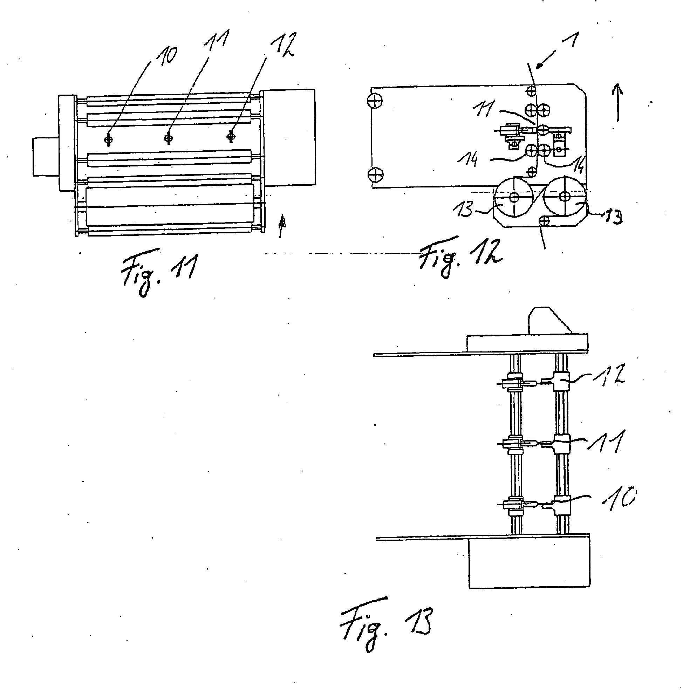

In den Figuren 11 bis 13 ist eine Vorrichtung zum Aufbringen einer Prägung bzw. eine Prägelinie in die entsprechende Kunststofffolie dargestellt. Figur 11 zeigt eine Draufsicht eines kompletten Ultraschall-Prägeautomates mit drei Ultraschalleinheiten 10, 11, 12 oder Sonotroden, über die ein Teil der Stärke einer Kunststofffolie aufgeschmolzen und anschließend über Prägewalzen verdrängt wird. Das komplett mit den Kunststofffolien 3, 4 veredelte Substrat 2 wird dabei von unten über Umlenkrollen 13 und Führungsrollen zu den jeweiligen Prägeeinrichtungen 10, 11, 12 geführt. Dort wird über eine Ultraschalleinheit ein Teil der Kunststoffoberfläche aufgeschmolzen und vor dem Erstarren unter Aufbringung einer Prägung über eine Prägerolle oder -walze verdrängt. Anschließend wird das fertig geprägte Produkt aus der Maschine herausgeführt.

In der Figur 13 sind die drei Ultraschall-Prägeeinheiten 10, 11, 12 dargestellt, durch die das Material hindurchführt wird.

## Patentansprüche

1. Faltbares Produkt mit einem Substrat (2), das mit einer Kunststofffolie veredelt ist und zumindest eine Falzlinie aufweist, entlang derer das Produkt faltbar ist, **dadurch gekennzeichnet, dass** entlang der Falzlinie des beidseitig veredelten, bedruckten Substrates (2) aus Papier, Pappe, Karton oder Kunststoff die Kunststofffolie (3, 4) auf beiden Seiten des bedruckten Substrates (2) zumindest bereichsweise über einen Teil ihrer Materialstärke ohne Wärmedurchtritt zu dem Substrat (2) aufgeschmolzen ist und eine durch Materialverdrängung erhaltene Prägestruktur (8) aufweist.

2. Produkt nach Anspruch 1, **dadurch gekennzeichnet, dass** die Prägestruktur (8) unterbrochen oder als durchgängige Linie ausgebildet ist.

3. Produkt nach Anspruch 1 oder 2, **dadurch gekennzeichnet, dass** mehrere Prägestrukturen (8) nebeneinander angeordnet sind.

4. Produkt nach einem der voranstehenden Ansprüche, **dadurch gekennzeichnet, dass** die Prägestrukturen (8) wechselseitig in den Kunststofffolien (3, 4) eines beidseitig veredelten Produktes (1) angeordnet sind.

5. Produkt nach einem der voranstehenden Ansprüche, **dadurch gekennzeichnet, dass** es als Buchumschlag verwendet wird.

6. Verfahren zum Herstellen eines mit Kunststofffolie veredelten Produktes, bei dem ein bedrucktes Substrat (2) aus Papier, Pappe, Karton oder Kunststoff, insbesondere Druckereierzeugnis, beidseitig mit Kunststofffolie veredelt wird und über Ultraschallsonotroden die Kunststofffolie zumindest bereichsweise über zumindest einen Teil der Materialstärke entlang einer Falzlinie des Substrates (2) ohne Wärmedurchtritt zu dem bedruckten Substrat (2) aufgeschmolzen und der aufgeschmolzene Teil der Kunststofffolie durch ein Prägewerkzeug verdrängt wird.

7. Verfahren nach Anspruch 6, **dadurch gekennzeichnet, dass** die Prägestruktur linienförmig aufgebracht wird.

8. Verfahren nach Anspruch 6 oder 7, **dadurch gekennzeichnet, dass** die Prägestruktur als periodisch wiederkehrendes Muster oder als eine Zeichenfolge aufgebracht wird.

9. Verfahren nach einem der Ansprüche 6 bis 8, **dadurch gekennzeichnet, dass** die Prägestruktur entlang einer Falzkante des Produktes aufgebracht wird.

10. Verfahren nach einem der Ansprüche 6 bis 9, **dadurch gekennzeichnet, dass** das Aufschmelzen und das Prägen gleichzeitig durch die Sonotrode ausgeführt werden.

11. Verfahren nach einem der Ansprüche 6 bis 10, **dadurch gekennzeichnet, dass** die Prägestruktur durch eine Prägewalze aufgebracht wird.

## Claims

1. Foldable product having a substrate (2), which foldable product is refined with a plastic film and has at least one folding line, along which the product can be folded, **characterized in that**, along the folding line of the printed substrate (2) which is refined on both sides and is made from paper, cardboard, board or plastic, the plastic film (3, 4) is melted on both sides of the printed substrate (2) at least in regions over part of its material thickness, without the passage of heat to the substrate (2), and has an embossed structure (8) which is obtained by the displacement of material.

2. Product according to Claim 1, **characterized in that** the embossed structure (8) is configured to be interrupted or as a continuous line.

3. Product according to Claim 1 or 2, **characterized in that** a plurality of embossed structures (8) are arranged next to one another.

4. Product according to one of the preceding claims, **characterized in that** the embossed structures (8) are arranged alternately in the plastic films (3, 4) of a product (1) which is refined on both sides.

5. Product according to one of the preceding claims, **characterized in that** it is used as a book cover.

6. Method for producing a product which is refined with plastic film, in which method a printed substrate (2) made from paper, cardboard, board or plastic, in particular a printed product, is refined on both sides with plastic film, and the plastic film is melted via ultrasonic sonotrodes at least in regions over at least part of the material thickness along a folding line of the substrate (2), without the passage of heat to the printed substrate (2), and the melted part of the plastic film is displaced by an embossing die.

7. Method according to Claim 6, **characterized in that** the embossed structure is applied in a linear manner.

8. Method according to Claim 6 or 7, **characterized in that** the embossed structure is applied as a periodically repeating pattern or as a character string.

9. Method according to one of Claims 6 to 8, **characterized in that** the embossed structure is applied along a folding edge of the product.

10. Method according to one of Claims 6 to 9, **characterized in that** the melting and the embossing are carried out at the same time by the sonotrode.

11. Method according to one of Claims 6 to 10, **characterized in that** the embossed structure is applied by an embossing roller.

## Revendications

1. Produit pliant comprenant un substrat (2) qui est ennobli d'une feuille en matière synthétique et présente au moins une ligne de pliage le long de laquelle le produit est pliant, **caractérisé en ce que** le long de la ligne de pliage du substrat (2) imprimé, en papier, carton, carton d'emballage ou matière synthétique, ennobli sur ses deux faces, la feuille en matière synthétique (3, 4) est fondue au moins par zones sur une partie de son épaisseur sans traversée de la chaleur jusqu'au substrat (2), et présente une empreinte structurée (8) obtenue par repoussage de matière.

2. Produit selon la revendication 1, **caractérisé en ce que** l'empreinte structurée (8) est réalisée sous forme interrompue ou de ligne continue.

3. Produit selon la revendication 1 ou 2, **caractérisé en ce que** plusieurs empreintes structurées (8) sont disposées côte à côte.

4. Produit selon l'une des revendications précédentes, **caractérisé en ce que** les empreintes structurées (8) sont disposées alternativement dans les feuilles de matière synthétique (3, 4) d'un produit (1) ennobli sur ses deux faces.

5. Produit selon l'une des revendications précédentes, **caractérisé en ce qu'**il est utilisé comme couverture de livre.

6. Procédé pour fabriquer un produit ennobli d'une feuille en matière synthétique, dans lequel on ennoblit de feuille en matière synthétique sur ses deux faces un substrat (2) en papier, carton, carton d'emballage ou matière synthétique, en particulier un produit d'imprimerie, et au moyen de sonotrodes à ultrasons on fait fondre au moins par zones la feuille de matière synthétique sur une partie au moins de son épaisseur le long d'une ligne de pliage du substrat (2), sans traversée de chaleur jusqu'au substrat imprimé (2), et on repousse la partie fondue de la feuille de matière synthétique au moyen d'un outil à empreinte.

7. Procédé selon la revendication 6, **caractérisé en ce que** l'empreinte structurée est réalisée en forme de ligne.

8. Procédé selon la revendication 6 ou 7, **caractérisé en ce que** l'empreinte structurée est réalisée sous forme de motif revenant périodiquement ou sous forme d'une séquence de signes.

9. Procédé selon l'une des revendications 6 à 8, **caractérisé en ce que** l'empreinte structurée est réalisée le long d'une arête de pliage du produit.

10. Procédé selon l'une des revendications 6 à 9, **caractérisé en ce que** la fusion et la formation de l'empreinte sont réalisées simultanément par la sonotrode.

11. Procédé selon l'une des revendications 6 à 10, **caractérisé en ce que** l'empreinte structurée est réalisée par un rouleau à empreinte.
